# EUROPEAN PATENT APPLICATION

(11) **EP 4 546 224 A1**
(43) Date of publication of application: **30.04.2025**
(21) Application number: 24209205.4
(22) Date of filing: 28.10.2024
(51) Int. Cl.: G06N 20/00, G06N 3/08

(54) **TRAINING ML MODELS FOR SYNTHETIC DATA GENERATION**

(30) Priority: 27.10.2023 DE 102023129808; 10.05.2024 DE 102024113141
(71) Applicant: Bundesdruckerei GmbH, 10969 Berlin (DE)
(72) Inventor: MENTER, Josef, 10179 Berlin (DE); KAUER-BONIN, Josef, 10969 Berlin (DE); RADONS, Manuel, 15712 Königs Wusterhausen (DE); SUN, Xiaohai, 53225 Bonn (DE); EBLE, Holger, 10965 Berlin (DE); WORMSBECHER, Wadim, 15732 Schulzendorf (DE); GRAUPNER, Hendrik, 14050 Berlin (DE)
(74) Representative: Richardt Patentanwälte PartG mbB

(57) **Abstract**

Disclosed is a method for training a set of one or more machine learning (ML) models for generation synthetic data, the method comprising: providing a dataset, referred to as original dataset, comprising records, wherein each record of the records comprises values of the set of attributes; determining at least one objective function and an evaluation function for training the set of one or more ML models; using the original dataset for training each ML model of the set of ML models for optimizing a respective objective function of the at least one objective function, wherein the evaluation function is used for evaluating the ML model during training the ML model or after training the set of one or more ML models; providing at least one of the set of trained ML models.

## Description

### FIELD OF THE INVENTION

The disclosure relates to synthetic data generation, and particularly to a method for training a machine learning model to generate synthetic data.

### BACKGROUND

Synthetic data may refer to a reproduction of data that represents certain field and is not obtained by direct measurement.

### SUMMARY

Example embodiments provide a method (training method) for training a set of one or more machine learning (ML) models for generation of synthetic data, the method comprising: providing a dataset, referred to as original dataset, comprising records, wherein each record of the records comprises values of a set of attributes; determining at least one objective function and an evaluation function for training the set of one or more ML models; using the original dataset for training each ML model of the set of one or more ML models for optimizing a respective objective function of the at least one objective function, wherein the evaluation function is used for evaluating the ML model during the training of the ML model or after training the set of one or more ML models, wherein the training is performed so that the ML model generates a synthetic dataset; providing at least one trained ML model of the set of trained ML models. The set of trained ML models may for example be configured to generate synthetic dataset of desired size e.g., desired number of records.

Example embodiments provide a computer system for training a set of one or more machine learning (ML) models for generation of synthetic data, the computer system comprising the set of one or more ML models and an original dataset comprising records, wherein each record of the records comprises values of the set of attributes, the computer system being configured for: determining at least one objective function and an evaluation function for training the set of one or more ML models; using the original dataset for training each ML model of a set of one or more ML models for optimizing a respective objective function of the at least one objective function, wherein the evaluation function is used for evaluating the ML model during the training of the ML model or after training the set of one or more ML models, wherein the training is performed so that the ML model generates a synthetic dataset; providing at least one trained ML model of the set of trained ML models.

Example embodiments provide a computer program comprising instructions for causing a computer system for performing the training method.

### BRIEF DESCRIPTION OF THE DRAWINGS

In the following, examples are described in greater detail making reference to the drawings in which:
Fig. 1 is a flowchart for generation of synthetic data in accordance with an example of the present subject matter.
Fig. 2 is a flowchart of a training method for training a set of one more machine learning models for generation of synthetic data in accordance with an example of the present subject matter.
Fig. 3 is a block diagram of an exemplary computer system for implementing at least part of the present method in accordance with an example of the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable a systematic and accurate generation of synthetic data using machine learning models. The present subject matter may enable to generate synthetic data flexibly, e.g., the present method may be executed as often as possible to generate the synthetic data. For example, in case a user has not enough storage space the generated synthetic data may be deleted and if it is needed again other synthetic data may be generated following the same statistical properties of the deleted synthetic data. The present subject matter may enable to generate synthetic data in desired amounts and desired targets. For example, a large amount of synthetic data may be used for training a ML model or performing a reliable data analysis.

A dataset may be provided. The provided dataset may be referred to as original dataset. The original dataset comprises multiple data records having a set of attributes. Each record of the original dataset may comprise values of the set of attributes (or fields). The attribute, may for example, be of a type such as numeric type, string type, or Boolean type. Each record of the original dataset may represent a respective entity, e.g., the records may represent students where the set of attributes may comprise, age, student's address, student's ID, or the records may represent bank accounts, where the set of attributes may comprise account balance, account holder, the name of the bank etc. The original dataset may, for example, comprise a table having a set of columns representing the set of attributes respectively. The original dataset may represent a field such as finance field, industry filed or any other field that can be represented with the set of attributes. The terms "data record" and "record" are interchangeably used.

In one example, records of the original dataset may be obtained from records which are received from one or more data sources. The data sources may, for example, be databases. For example, a query may be sent by the computer system to the one or more data sources and in response to the query, the computer system may receive records of the original dataset. The computer system may create the table out of the received records. Alternatively, or additionally, records of the original dataset may be obtained from records which are derived or created by processing unstructured data such as web pages and PDF files.

The received records and/or derived records may be referred to as initial records. The records of the original dataset may be obtained from the initial records. In one example, records of the original dataset may be the initial records. Alternatively, or additionally, records of the original dataset may be obtained by pre-processing the initial records. Each initial record of the initial records may have zero or more attributes values which are set to NULL to indicate that the value of the one or more attributes are unknown, missing or unreadable value. Each attribute of the set of attributes may have a NULL value in one or more of the initial records or may not have NULL values in the initial records.

A set of one or more machine learning (ML) models may be provided. For example, the set of one or more ML models may be multiple ML models. Alternatively, the set of one or more ML models may be one ML model. Each ML model of the set of one or more ML models is configured to receive a dataset and generate a synthetic dataset (e.g., with a specific number of records). Each ML model of the set of one or more ML models may be trained using the original dataset. The training may, for example, be performed using unsupervised learning. The training of the ML model is performed so that the ML model generates a synthetic dataset, wherein the synthetic dataset has a desired number of records. For example, the training of the ML model may be performed using one or more functions. The function may, for example, be an objective function or an evaluation function. The objective function may represent an optimization goal, while the evaluation function may provide a measure of how well the ML model is performing. The objective function may be used during the training process of the ML model to guide the optimization of the ML model. The training of each ML model may depend on the type of the ML model. For example, the number of training iterations that the ML model may perform to optimize its parameters, as well as the number of samples used in each step may be defined. They may be defined depending on the type of ML model.

The set of one or more ML models may be obtained from one or more ML algorithms. In one example, each ML model of the set of one or more ML models may be obtained from a respective (distinct) ML algorithm. Alternatively, one or more subsets of the set of ML models may be obtained from the respective same ML algorithm using a different set of hyperparameters per ML model e.g., the set may comprise two subsets that are obtained by two different ML algorithms respectively.

In one example, the training of each ML model of the set of one or more ML models may be performed using an objective function and an evaluation function. The evaluation function may be common to the set of one or more ML models. In one example, the training of each ML model of the set of one or more ML models may be performed using a respective objective function which is specific or associated with the each ML model and using the evaluation function. The objective function may, for example, be a loss function. Each ML model of the set of one or more ML models may have parameters (e.g., such as weights in case of a neural network) which are learnable. The evaluation function may be defined by one or more metrics. The value of the evaluation function may refer to the values of the one or more metrics. The metric may be descriptive of the generated synthetic dataset. The metric may, for example, represent a comparison of the synthetic dataset and the original dataset. The metric may, for example, indicate a difference between a property of the synthetic dataset with that property of the original dataset. In another example, the metric may indicate the privacy and/or confidentiality level provided by the synthetic data.

The evaluation function may further be defined with a target criterion. The target criterion may require that each metric of the evaluation function has a respective one target value or the each metric is within a respective target range of values. Alternatively, the target criterion may require that a combination of the metrics of the evaluation function has one target value or the combination is within a respective target range of values. In case the evaluation function comprises two metrics, the combination may, for example, be the ratio of the two metrics. In another example, the combination may be the sum of the metrics of the evaluation function. In another example, the combination may be the weighted sum of the metrics of the evaluation function, wherein each metric is associated with a respective weight. The weights may, for example, be user defined weights. This may, for example, enable the owner of the original dataset to give more importance to one metric compared to the other metrics. In one example, the target criterion may be defined by the owner of the original dataset. This may particularly be advantageous in case one or more users which belong to the owner may need synthetic data that may be generated by the trained ML models which are provided according to the present subject matter. The term "user" may refer to an entity e.g., an individual, a computer, or an application executing on a computer. For example, the owner may get a quantified statement about the evaluation function of the ML model or the synthetic data generated from it, and can relate the metrics of the evaluation function to a desired/required relationship.

In one first training example, in each iteration of the training of the ML model, records of the original dataset may be input to the ML model to generate the synthetic data records. The objective function may be evaluated using the input records and the synthetic records. In case the objective function does not fulfill a convergence criterion, the learnable parameters may be updated or changed (e.g., based on the value of the objective function) and a next iteration of the training may be performed. In case the loss function fulfills the convergence criterion, the resulting trained ML model may be provided. The convergence criterion may, for example, require that the objective function exceeds a threshold. In one example implementation of the update of the learnable parameters, a backpropagation may be performed in order to update the learnable parameters of the ML model. The update of the learnable parameters may, for example, be performed using gradient descent. In case the convergence criterion is not fulfilled and all records of the original dataset are processed, records may be added to the original dataset and/or the convergence criterion may be changed (e.g., the convergence criterion may be loosened to make it less *strict* by changing the threshold value) and the training may be repeated.

The evaluation function may be used after the training of the set of one or more ML models is completed. The evaluation function may be used after training to assess the ML model's performance. After training each ML model of the set of one or more ML models, the evaluation function may be used. Each trained ML model of the set of one or more ML may be used to generate a synthetic dataset. The evaluation function may be evaluated for each generated synthetic dataset using the original dataset. In one example, the set of one or more ML models may be ranked in accordance with the values of the evaluation function. And the first *n* ranked ML models may be provided in order to be used in the inference phase, where *n* is an integer number higher than or equal to one. In one example, n=1, n=2 or n=3. In another example, only the subset of ML models which have the values of the evaluation function fulfill the target criterion may be ranked in accordance with the values of the evaluation function. And the first n ranked ML models may be provided in order to be used in the inference phase. In case none of the ML models fulfils the target criterion, the training of the set of one or more ML models may be repeated by adding data records and/or changing the convergence criterion and/or changing the target criterion and/or tuning hyperparameters of the underlying ML model (depending on the algorithm used). The repetition may be performed until one or more trained ML models may fulfill the target criterion. In one example, the owner of the original dataset may receive the values of the evaluation function of the set of trained ML models and may relate values of the evaluation function to a desired/required value or relationship which is the owner's target criterion. In case all the set of one or more trained ML models are rejected by the owner, the training of the set of one or more ML models may be repeated by adding data records and/or changing the convergence criterion and/or changing the target criterion e.g., to the owner's defined target criterion. The repetition may be performed until one or more trained ML models may fulfill the target criterion.

In one second training example, the evaluation function may be used during the training of the ML model. In this case, the training of each ML model of the set of ML models may be performed as follows. In each iteration of the training of the ML model, records of the original dataset may be input to the ML model to generate the synthetic data records. The objective function as well as the evaluation function may be evaluated using the input records and the synthetic records. In case the objective function does not fulfill a convergence criterion and/or the evaluation function does not fulfill a target criterion, the learnable parameters may be updated or changed (e.g., based on the value of the objective function) and a next iteration of the training may be performed. In case the loss function fulfills the convergence criterion and the evaluation function fulfills the target criterion, the resulting trained ML model may be provided e.g., for inference.

The synthetic dataset which is generated by each trained ML model of the set of one or more ML models may have records having the set of attributes. Each record of the synthetic dataset may comprise values of the set of attributes.

The training according to the first and second training examples may be performed at the computer system.

The present subject matter may provide different pre-processing techniques of the initial records for providing the original dataset. This may enable to improve the training process.

In one first pre-processing example, the NULL values which are present in the initial records may be replaced by non-NULL values. This may ensure that the dataset used for training the machine learning models does not contain any missing values, which could potentially affect the accuracy of the models. In one example, the NULL-values may be replaced by predefined reference values of the respective attributes. For example, each attribute of the set of attributes may be associated with a reference value. The NULL-value of a given attribute of the set of attributes may be replaced by the reference value of the given attribute. In another example, each NULL value of a given attribute of the set of attributes may be replaced by random sampling in non-NULL values of the given attribute in the initial records, without changing the underlying distribution of the sampled values. For example, if a given attribute of the set of attributes has a NULL value, a first distribution of the non-NULL values of the given attribute which are present in the initial records may be determined, and the NULL-value may be replaced by a sampled value which is obtained by sampling the non-NULL values of the given attribute. The replacement is performed such that a second distribution of the non-NULL values (e.g., including the sampled value) of the given attribute after the replacement is performed may be similar to the first distribution e.g., the first and second distributions may be similar if the difference between the first and second distributions is smaller than a threshold. This sampling may specifically target the values of the attribute that are not NULL values, resulting in the acquisition of a sampled value. The value, which serves as a replacement for the NULL value, is the sampled value. This sampling may be designed to maintain the integrity of the data and ensure that the trained ML models can be effectively utilized in various applications and scenarios. This may also ensure that the replacement value is representative of the existing values in the attribute. For categorical attributes, the NULL value may be handled as an additional category e.g., the feature/attribute fruits has the three category {"apple", "Banana", None}.

For example, if the dataset contains information about customers, including their age, income, and purchase history, in some cases, certain fields may be missing for some customers, resulting in NULL values. To address this, the preprocessing may replace these NULL values with predefined values, such as the mean or median value of a numeric field in the dataset. This may ensure that the dataset is complete and ready for training the machine learning models. Alternatively, instead of using predefined values, the NULL values may be replaced using imputation methods, such as regression imputation or k-nearest neighbors imputation. These methods estimate the missing values based on the values of other features in the dataset or similar instances in the dataset, respectively. This may enable accurate replacement of the NULL values. This may ensure that the replacement value is representative of the existing values in the attribute.

In one example, the first pre-processing example may optionally further comprise the creation of an additional column or attribute to keep track of the replaced NULL values. In this example, attributes of the set of attributes which have the NULL values may be continuous or numerical attributes. For example, an additional column may be added to the original dataset resulting in an augmented dataset. The additional column is associated with an additional attribute having two distinct values: first value (e.g., 1) and second value (e.g., 0). In case a record of the augmented dataset has at least one NULL value, the first value may be assigned to the additional attribute in that record, otherwise the second value may be assigned to the additional attribute in that record. After generating the synthetic data by each trained ML model of the provided trained ML models, records of the synthetic data that correspond to the records having the first value in the augmented dataset may be identified. And, the synthetic data values of the one or more attributes that have NULL values in the augmented dataset may be replaced by NULL value respectively. For example, if a given record of the augmented dataset had two attributes at1 and at2 which have NULL values before performing their replacement, the additional column for the given record has the first value has the first value. And for the record of the synthetic dataset that corresponds to the given record, the values of the attributes at1 and at2 may be replaced by NULL values respectively. For example, this may enable that NULL values in numeric attributes are binary masked as a new attribute (1 = NULL value, 0 = other value), allowing them to be self-synthesized and correlations with other attributes to be learned by the model. By replacing them with uniformly distributed random values in the original attribute, the underlying (normalized) distribution may not be corrupted.

According to one example, the method further comprises: creating an additional column in the original dataset resulting in an augmented dataset, the additional column being associated with an additional attribute having two distinct values: first value and second value; in case a record of the augmented dataset has at least one NULL value, assigning the first value to the additional attribute in that record, otherwise assigning the second value to the additional attribute in that record; after generating the synthetic data by each trained ML model of the provided trained ML models, identifying records of the synthetic data that correspond to the records having the first value in the augmented dataset, and replacing by NULL value in the synthetic data values of the one or more attributes that have NULL values in the augmented dataset, wherein the attributes which have the NULL values are numerical or continuous attributes. A record of the syntehtic data may correspond with a record of the augmentted dataset if they have a similarity value that exceeds a threshold, wherein the simialrity value may be obtained by applying a simialrity metric to the compared records. With this example, synthetic data may accurately represent the original data it is generated from. It may capture the patterns, correlations, and statistical properties of the original data to ensure that it is a suitable substitute for training, testing, or analysis purposes.

In one second pre-processing example, the outliers which are present in the initial records may be processed using a predefined outlier processing procedure to detect and remove the outliers. In one example, the outlier processing procedure may use k-anonymization (where k may be determined during optimization) to detect and remove outliers. Removing the outliers may be advantageous as they may impact re-identification later in synthesis.

In one third pre-processing example, each of the initial records may have the set of attributes or have a larger set of attributes. In case the initial records have a larger set of attributes, the set of attributes may be selected from the larger set of attributes using a selection criterion. The selection criterion may for example require a user input that indicates the set of attributes to be selected. In another example, the selection criterion may require the set of attributes to be of one or more predefined types, wherein the predefined type may be for example a numerical type. The set of attributes may, for example, comprise attributes of numeric type (numerical attributes).

In one fourth preprocessing example, the pre-processing may include steps such as data cleaning, data normalization, and feature engineering of the initial records. Data cleaning may involve removing any irrelevant or duplicate data points, as well as handling missing values. Data normalization may be performed to scale the data to a standard range, which may help in improving the performance of the machine learning models. Feature engineering may involve creating new features or transforming existing features of the initial records to enhance the predictive power of the models. Once the initial records have been preprocessed, they may be used to train the machine learning models.

The present subject matter may use different types of ML models. In one example, each ML model of the set of one or more ML models may be a tabular variational autoencoder (TVAE), Conditional Tabular Generative Adversarial Networks (CTGAN) or Private Data Release via Bayesian Networks (PrivBayes). These ML models may have different advantages depending on the nature and amount of the initial data.

The training method may provide different advantageous evaluation functions. In one example, the evaluation function may comprise a privacy metric and a utility metric. The security level of a generated synthetic dataset may, for example, be a value of a privacy metric that is evaluated on the synthetic dataset. These metrics may play a role in determining the effectiveness and applicability of the trained ML models. The privacy metric may be utilized to assess the level of privacy protection provided by the trained ML models. It may measure the extent to which the models safeguard sensitive or personal information during their utilization. By incorporating this metric, the disclosed method may ensure that the provided ML models prioritize privacy and adhere to relevant data protection regulations. The utility metric and the privacy metric may be typically negatively correlated, so a compromise or threshold of the ratio may be established for the target criterion. The privacy metric may measure the level of privacy protection provided by the generated synthetic data, while the utility metric may assess the usefulness or accuracy of the synthetic data in representing the original data. For the privacy metric, various techniques may be employed to quantify it in order to provide the level of privacy protection. One approach to quantify the privacy metric may be to measure the degree of information disclosure or identifiability in the synthetic data. This may be done by calculating the re-identification risk or the probability of an entity being re-identified from the synthetic data. Another approach to quantify the privacy metric may be to evaluate the differential privacy of the synthetic data, which quantifies the privacy guarantee provided by the data generation process. The utility metric, on the other hand, may focus on the quality and usefulness of the synthetic data. It may be measured by comparing statistical properties or characteristics of the synthetic data with those of the original data. For example, the utility metric may include measures such as mean squared error or correlation coefficient. In another example, the utility metric may comprise an accuracy of a ML model (e.g., classification model) which is trained on the synthetic data.

To illustrate the application of these metrics, consider an example where the trained ML models are utilized in a healthcare setting. The privacy metric may assess how well the models protect sensitive patient data, such as medical records or genetic information, during the prediction or analysis process. The utility metric, on the other hand, may evaluate the accuracy and reliability of the models in diagnosing diseases or predicting patient outcomes.

In one example, the evaluation function may include a metric such as accuracy, which measures the percentage of correctly generated data, and precision, which measures the proportion of correctly generated data. The target criterion could be set at an accuracy of 90% and a precision of 80%. The ML model may then be evaluated using synthetic data and the original data, and if the calculated metrics fulfill the target criterion, the ML model is deemed to have met the desired level of performance.

Furthermore, the evaluation function may be customized to include different metrics and target criteria based on the specific application or scenario. For example, in generation of synthetic data in a healthcare system, the evaluation function may include metrics such as precision metric.

According to one example, the evaluation function is defined by one or more metrics and a target criterion, wherein evaluating the ML model using the evaluation function comprises: evaluating the one or more metrics using synthetic data that is generated by the ML model and the original dataset, determining whether the evaluated one or more metrics fulfill the target criterion.

For example, to evaluate the performance of the ML models, the evaluation function is defined. The evaluation function is determined by one or more metrics and a target criterion. The metrics may serve as a measure of the ML model's performance, while the target criterion may set the desired level of performance that the ML model should achieve. To assess the ML model's performance, the evaluation process involves the use of synthetic data. This synthetic data is generated by the ML model itself, based on the original dataset. During the evaluation process, the one or more metrics are calculated using the synthetic data and the original dataset. These metrics may include accuracy, precision, recall, or any other relevant performance indicators. The calculated metrics are then compared to the target criterion to determine whether the ML model meets the desired level of performance.

According to one example, the target criterion requires that a combination of the one or more metrics of the evaluation function has one target value or the combination is within a target range of values, wherein the combination is a weighted sum of the metrics of the evaluation function using weights, wherein each metric is associated with a respective weight of the weights.

For example, the target criterion may specify that the combination of metrics, such as accuracy, precision, and recall, should have a target value of 0.9 . The combination may be a weighted sum. The weights assigned to the metrics in the evaluation function determine their relative importance in achieving the target criterion. The set of weights may be customized based on the specific requirements of the application or scenario. For instance, in a predictive analytics application, the weights may be adjusted to prioritize certain metrics, such as minimizing accuracy or maximizing precision, depending on the desired outcome. Furthermore, alternative examples may utilize different mathematical functions to calculate the combination of metrics. Instead of a weighted sum, other mathematical operations such as weighted averages, geometric means, or even non-linear functions can be employed to determine the combination.

According to one example, the at least one objective function is a singular objective function. This singular objective function is utilized for the training of the set of one or more Machine Learning (ML) models. This singular objective function may serve as a guiding principle during the training process, enabling the ML models to learn and adapt to different applications and scenarios.

According to one example, the set of ML models may comprise multiple ML models. The at least one objective function is a set of objective functions. Each objective function in the set of objective functions is associated with a respective ML model in the set of ML models.

In this example, each objective function may specifically be tailored to a respective ML model in the set. The objective functions serve as a guide for the ML models, providing them with specific goals and criteria to optimize their performance. By associating each ML model with a unique objective function, the method may allow for a more targeted and specialized approach to training and utilizing the ML models. In addition to the described example, alternative approaches can be considered. For instance, instead of associating each ML model with a single objective function, a combination of objective functions may be used. This may allow for a more comprehensive evaluation of the ML models' performance, taking into account multiple criteria simultaneously. Furthermore, the objective functions themselves may be customized and adjusted based on the specific needs of the application or scenario. Different weighting schemes, or constraints can be incorporated into the objective functions to further fine-tune the performance of the ML models.

According to one example, the set of one or more ML models comprises multiple ML models, wherein the at least one objective function is multiple objective functions, wherein each objective function of the multiple objective functions is associated with a respective one or more ML models of the set of ML models.

According to one example, providing the original dataset comprises performing at least one of: receiving initial records from one or more data sources of structured data; or deriving initial records from one or more data sources of unstructured data; obtaining the records of the original dataset from the initial records. This may allow for a comprehensive dataset that includes structured and/or unstructured data. The unstructured data, such as natural language text, may be processed to derive the initial records which are in a structured format. For example, extracting initial records from text may be performed by identifying and classifying named entities in the text into predefined categories such as names, organizations, locations, dates, and other specific attributes. This process may be accomplished through a natural language processing (NLP) technique.

For example, in a healthcare application, the structured data may include patient demographics, medical history, and laboratory results, while the unstructured data may include doctor's notes, radiology reports, and pathology reports. By combining both types of data, the trained ML models can leverage the rich information contained in the unstructured data. This example may involve consolidating data from multiple sources, such as databases, APIs, or file systems, into a unified dataset. The example may ensure that all relevant records are included in the original dataset, regardless of their source or format. For instance, in a financial application, the original dataset may include transaction data from different banking systems, credit card statements, and customer feedback from social media platforms. The example may ensure that all these records are collected and organized into a cohesive dataset for training the ML models.

According to one example, the method further comprises ranking the set of trained ML models using the respective values of the evaluation function, selecting the highest n ranked ML models of the set of ML models, wherein the provided at least one trained ML model is the selected ML models, where n is an integer higher than or equal to one. Alternatively, the provided at least one trained ML model may be all trained one or more ML models.

By ranking the ML models, the training method may ensure that the most effective and reliable models are selected for utilization. For example, if the set of trained ML models consists of five models: Model A, Model B, Model C, Model D, and Model E, each model has been trained on a different dataset and exhibits varying levels of performance. The evaluation function calculates a score for each model based on its performance metric(s). After ranking the models using the evaluation function, the method selects the highest 'n' ranked ML models from the set. The value of 'n' can be determined based on the specific requirements of the application or scenario. For instance, if 'n' is set to 3, the method would select the top three ranked models for utilization. Continuing with the previous example, if the evaluation function ranks the models as follows: Model C (highest score), Model A, Model E, Model B, and Model D (lowest score) and 'n' is set to 2, the method would select Model C and Model A as the provided trained ML models.

In another example, the selection of the trained ML models may be customized based on the specific needs of the user. For instance, the user may prioritize models with higher accuracy or models that perform well on specific types of data. The flexibility of the method may allow for the selection of ML models that best suit the requirements of the application or scenario.

According to one example, a trained ML model of the provided at least one trained ML model may be used for generating synthetic data. In this example, the trained ML model may be utilized to generate synthetic data that can be used for various applications and scenarios. The synthetic data is generated by feeding desired number of records into the trained ML model and obtaining corresponding output data having the desired number of records. To generate the synthetic data, the trained ML model may first be loaded into a computing system or platform capable of executing the model. The desired number of records is then provided to the model. The model processes the input and produces output data based on its learned patterns and relationships. The synthetic data generated by the trained ML model may be used for a variety of purposes. For example, it can be used to augment existing datasets for training and testing other ML models. By generating synthetic data, the dataset can be expanded to include a wider range of examples, which can improve the performance and generalization of the ML models trained on this data. Additionally, the synthetic data can be used for data augmentation. Furthermore, the synthetic data may be used for simulation and testing purposes. By generating synthetic data that mimics real-world scenarios, the trained ML model can be evaluated and validated in a controlled environment before deploying it in production. This can help identify potential issues or limitations of the model and make necessary improvements or adjustments.

According to one example, the evaluation function is defined by one or more metrics and a target criterion, the target criterion indicating a target value or a target range values for the one or more metrics. The method comprises: creating a synthetic data generation module, the data generation module comprising the at least one ML model of the set of trained ML models in association with the respective targets values; receiving at the synthetic data generation module a request to generate synthetic data; selecting by the synthetic data generation module a trained ML model based on the target value associated with the trained ML model and the received request; using by the synthetic data generation module the selected ML model to generate synthetic data; providing by the synthetic data generation module the synthetic data to a requester of the synthetic data.

According to one example, the records of the original dataset are obtained through a process of preprocessing initial records.

The present subject matter may comprise the following examples.

Example 1. A method for training a set of one or more machine learning (ML) models for generation synthetic data comprising a number of records, the method comprising: providing a dataset, referred to as original dataset, comprising records, wherein each record of the records comprises values of the set of attributes; using the original dataset for training each ML model of the set of one or more ML models for optimizing a respective objective function of at least one objective function, wherein an evaluation function is used for evaluating the ML model during the training of the ML model or after training the set of one or more ML models; providing at least one trained ML model of the set of trained ML models.

Example 2. The method of Example 1, wherein providing the original dataset comprises creating the original dataset.

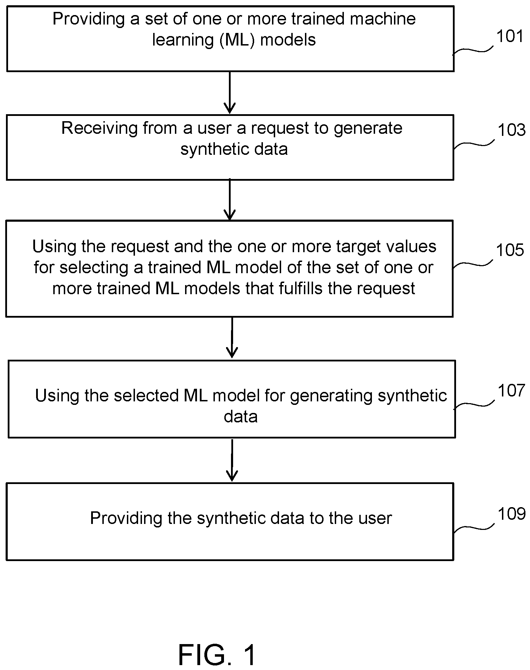

Part of or all of the trained set of one or more ML models may be used for generation of synthetic data in accordance with an inference method. An example implementation of the inference method may be described with the following sections that precedes the description the first figure Fig. 1. However, it is not limited to this inference method as other inference methods may use the trained set of ML models.

### Example implementation of the inference method

Advantageously, the inference method may solve the problem of efficiently selecting the most suitable machine learning model for generating synthetic data that accurately fulfills a user's specific request. Advantageously, the inference method may capitalize on the robust capabilities of machine learning to generate synthetic data in response to user requests.

In general terms, the inference method may enable to generate synthetic data using trained machine learning models. For that, the inference method may provide a set of one or more trained machine learning models. Each trained ML model of the set of one or more trained ML models is associated with a respective target value of an evaluation function. This evaluation function has been used to evaluate the set of one or more ML models for performing the training of the set of one or more ML models. The inference method further may comprise receiving a request from a user to generate synthetic data. The term "user" may refer to an entity e.g., an individual, a computer, or an application executing on a computer. The request and the one or more target values are used for selecting a trained ML model of the set of one or more trained ML models that fulfills the request. The selected ML model may then be used for generating synthetic data. In one example, the selected ML model may be executed to generate the synthetic data comprising a predefined default number of records. In another example, the selected ML model may receive an input so that the ML model generates the synthetic data according to the input, wherein the input may comprise the number of desired records in the synthetic data. The synthetic data may, for example, comprise a table having a set of columns representing a set of attributes respectively.

The inference method may comprise providing, by the synthetic data generator, the generated synthetic data to the user. The synthetic data generator may be a computer system. For example, upon generating the synthetic data, the synthetic data may be sent by the synthetic data generator to the user or stored in a storage accessible by the user. This may enable to provide synthetic data promptly to the user. Sending back the requested synthetic data promptly may ensure that the user can access the information in a timely manner. This may particularly be important when the data is time-sensitive or required for critical decision-making processes. Alternatively, the synthetic data may be stored in the synthetic data generator or in a shared database that is accessible by the user and/or other users. Storing the synthetic data in the shared database may allow for centralized data management, where all users can access and use the data from a single source, ensuring data consistency and reducing the risk of data duplication or inconsistency. Also, the shared database may provide better data security compared to storing data in a distributed manner. A single storage may offer robust security features, such as user authentication, access control, and encryption, to protect data from unauthorized access or tampering. For example, the synthetic data may be stored in the shared database according to a security feature. This security feature may, for example, require user authentication and/or access control for access to the synthetic data. This storage in accordance with the security feature may, for example, be performed based on the target value of the ML model that has been used to generate the synthetic data. For example, the storage in accordance with the security feature may be performed in case the generated synthetic data may have sensitive information according to the security level associated with the selected ML model. If the generated synthetic data does not have sensitive information, it may be stored without the security feature. The synthetic data may, for example, be provided in a structured format such as a tabular format.

The target value may represent a specific desired outcome or result that the evaluation function of a trained machine learning model is designed to achieve or approximate. The target value may be a value of the evaluation function. For example, if the evaluation function comprises one metric, the target value may be a value of the one metric. If the evaluation function comprises two or more metrics, the target value may be a vector of values of the metrics respectively. Alternatively, if the evaluation function comprises two or more metrics, the target value may be a combination of the values of the metrics. The combination may, for example, be a ratio, a concatenation, or a weighted sum.

The set of one or more ML models may be obtained from one or more ML algorithms. In one example, each ML model of the set of one or more ML models may be obtained from a respective (distinct) ML algorithm. Alternatively, one or more subsets of the set of ML models may be obtained from the respective same ML algorithm e.g., the set may comprise two subsets that are obtained by two different ML algorithms respectively. For example, for each subset, the same machine learning algorithm may lead to different machine learning models each associated with its own target value of the evaluation function.

In one example implementation, the set of one or more ML models may be provided as follows. For example, the set of one or more ML models may comprise a number N of ML models, where N is an integer number higher than or equal to one, N>=1. A data structure (e.g., such as a table) may be provided, where the data structure contains a mapping between the N ML models and the corresponding target values (tVs). For example, each ML model of the set of ML models may be associated with one target value as follows: ML1 - tV1, ML2 - tV2,...,MLN - tVN. Using the request of the synthetic data, one of the target values e.g., tV1... tVN that fulfills the request may be selected, and the ML model associated with that target value may be selected for generation of the synthetic data. In one example, if more than one target value fulfills the request, the associated more than one ML model may be ranked according to the target values and the highest ranked ML model may be selected. Alternatively, one ML model may be randomly selected from the more than one ML model. For example, the request may comprise a desired value of the evaluation function which is at equal distance from two target values tV1 and tV2. In this case, ML1 and ML2 may be ranked based on tV1 and tV2 and the highest ranked ML may be selected.

The target value and the associated ML model that fulfill the request may be selected using different techniques. In one example, the request may comprise a desired value of the evaluation function. The desired value may be compared against the target values in order to select the target value and the associated ML model. The comparison may be performed, for example, by computing the similarity between the desired value and each target value. The comparison may result in a similarity value. The similarity may, for example, be a distance similarity. If there are multiple target values, the target value that matches the desired value may be the most similar to the desired value. The most similar target value may be the target value that provides the highest similarity value when compared with the desired value. If there is only one target value, the target value matches the desired value if the similarity value exceeds a certain threshold. In case there is not matching with the target value, the request may be rejected or the similarity criterion, e.g., the threshold, may be loosen until to find a match with the target value.

Alternatively, the inference method may automatically assign a target value to the user, where the assigned target value may be the selected target value. In this case, the target value that fulfils the request may be the target value assigned to the user. This assignment may be performed randomly or based on predefined criteria. The criteria may assign target values based on the location of the user and/or based on the time at which the request is received and/or based on other attributes descriptive of the user and/or the request. The user attribute may, for example, be the location, network connection type or function of the user. For example, if the target value is a security level, an administrator that sent the request may be assigned a low security requirement (e.g., which corresponds to target value tV1) while a normal user that sent the request may be assigned a stricter security requirement (e.g., which corresponds to target value tVN); thus, the ML model ML1 associated with target value tV1 may be selected for the administrator and the ML model MLN associated with target value tVN may be selected for the normal user. In another example, if the target values are security levels and the user is located in the same place where the synthetic data generator is, the user may be assigned the highest security level; otherwise, the user may be assigned another lower security level.

According to one example, the request indicates both a desired value of the evaluation function and a desired number of records. In this example, the selected ML model is the ML model whose target value matches the desired value. Furthermore, the inference method may comprise generating synthetic data which may comprise records in the desired number. The target value that matches the desired value may be the most similar to the desired value. Or the target value matches the desired value if the similarity value exceeds a certain threshold.

This request may allow for a more precise selection of the trained ML model that may be used to generate the synthetic data. To elaborate on how the selection process may work, the inference method utilizes the target values associated with each trained ML model in the set. These target values represent the performance of the ML models as evaluated by the evaluation function during the training phase. By comparing the desired value specified in the request with the target values, the inference method identifies the ML model that best fulfills the user's requirements. Once the ML model with the matching target value is identified and selected, the inference method proceeds to generate the synthetic data. The synthetic data is generated in a quantity that corresponds to the desired number of records specified in the request. This may ensure that the user receives the exact needed number of synthetic records. For example, suppose a user requests the generation of synthetic data with a desired value of the evaluation function equal to 0.8 and a desired number of records equal to 100. The inference method may search for the trained ML model, in the set, that has a target value closest to 0.8. Once the ML model with the closest target value is identified, the inference method may generate 100 synthetic records using this selected ML model.

According to one example, selecting the trained ML model comprises: ranking the set of trained ML models using the respective target values of the evaluation function, determining an adequate rank for the user based on user predefined privilege access; and selecting the ML model associated with the determined rank.

For example, the evaluation function may be provided so that the ranking may take into account the accuracy of the trained ML models in generating synthetic data, the computational resources required for each model, or the time taken to generate the synthetic data. By considering multiple criteria, the selection process can be optimized to meet the specific needs and preferences of the user. To determine an adequate rank for the user, the inference method may take into account the user's predefined privilege access. For example, the user's predefined privilege access may be provided as a real number. Privilege access may be defined based on various factors such as the user's role, level of expertise, or specific requirements. For example, a user with higher privilege access may have access to more accurate or specialized trained ML models, while a user with lower privilege access may have access to a broader range of models but with potentially lower accuracy. The determination of the rank for the user may be based on a predefined mapping between privilege accesses and ranks. Once the rank for the user has been determined, the inference method proceeds to select the ML model that is associated with the rank. This selection may ensure that the user is provided with a trained ML model that aligns with the privilege access level and meets the specific requirements. By selecting the appropriate ML model, the inference method may ensure that the generated synthetic data is tailored to the user's needs and preferences. It should be noted that the selection of the trained ML model based on rank is just one possible approach. Alternative methods for selecting the ML model can be employed, such as using a probabilistic approach where the probability of selecting a particular model is based on its rank or using a machine learning algorithm to learn the user's preferences and select the most suitable model accordingly.

According to one example, the target value associated with each trained ML model indicates a security level of the synthetic data that are generated by the ML model. The inference method further comprises providing user categories, each user category being associated with a security level, and determining to which user category the user belongs in order to select the corresponding ML model. The security level of a data may, for example, represent the level of the sensitivity of the information contained in the data. The sensitivity may, for example, be determined based on the type of attributes in the data. Indeed, certain types of information may inherently be more sensitive than others. For example, personally identifiable information (PII), financial data, health records, trade secrets, or classified information may be considered have a higher sensitivity level than others.

This target value serves as an indicator of the security level of the synthetic data generated by the ML model. To enhance the flexibility and customization of the inference method, user categories are introduced. Each user category is associated with a specific security level. To determine the appropriate ML model for generating synthetic data, the inference method involves identifying the user's category. This categorization may be in selecting the ML model that aligns with the user's security requirements. Therefore, the inference method includes the step of selecting the ML model based on the user's category and the associated security level. For example, if the user categories are defined as "low security," "medium security," and "high security" and each category corresponds to a different level of sensitivity or confidentiality required for the synthetic data. When a user requests synthetic data, the inference method may determine the user's category based on their security preferences or access privileges. If the user belongs to the "low security" category, the inference method selects an ML model associated with a target value indicating a lower security level. This ML model is trained to generate synthetic data that meets the requirements of users with lower security needs. On the other hand, if the user falls into the "high security" category, the inference method selects an ML model associated with a target value indicating a higher security level. This ML model is trained to generate synthetic data that may adhere to stricter security standards.

In addition to the user categories mentioned above, alternative categorization schemes can be implemented based on specific requirements or industry standards. For instance, instead of using "low security," "medium security," and "high security" categories, the inference method may utilize categories such as "public data," "internal data," and "confidential data" to reflect different levels of data sensitivity. Furthermore, the inference method can incorporate additional factors beyond security levels to determine the appropriate ML model. For example, the inference method may consider factors such as data complexity, data volume, or specific data attributes. By taking these factors into account, the inference method can select an ML model that not only meets the user's security requirements but also aligns with other relevant considerations.

In one example, each ML model of the set of one or more ML models may be a tabular variational autoencoder (TVAE), Conditional Tabular Generative Adversarial Networks (CTGAN) or Private Data Release via Bayesian Networks (PrivBayes).

According to one example, the set of one or more ML models comprise multiple ML models.

According to one example, the evaluation function is defined by one or more metrics, wherein the one or more metrics comprise a privacy metric and a utility metric, wherein the target value of the evaluation function is a pair of values of the privacy metric and utility metric. This may enable a secure handling of synthetic data.

The privacy metric may measure the level of privacy protection provided by the generated synthetic data, while the utility metric may assess the usefulness or accuracy of the synthetic data in representing the original data. This may enable a secure handling of synthetic data. For the privacy metric, various techniques may be employed to quantify the level of privacy protection. One approach may be to measure the degree of information disclosure or identifiability in the synthetic data. This may be done by calculating the re-identification risk or the probability of an entity being re-identified from the synthetic data. Another approach may be to evaluate the differential privacy of the synthetic data, which quantifies the privacy guarantee provided by the data generation process. The utility metric, on the other hand, may focus on the quality and usefulness of the synthetic data. It may be measured by comparing statistical properties or characteristics of the synthetic data with those of the original data. For example, the utility metric may include measures such as mean squared error, correlation coefficient, or accuracy of classification models trained on the synthetic data. To determine the target value of the evaluation function, the privacy and utility metrics may be combined into a pair of values. The specific combination method can vary depending on the requirements and preferences of the user. For instance, in another example, a weighted sum approach may be used, where the privacy and utility metrics are assigned different weights to reflect their relative importance. Alternatively, a threshold-based approach may be employed, where the target value is determined based on predefined thresholds for the privacy and utility metrics. By associating each trained ML model with a respective target value of the evaluation function, the inference method may enable the selection of an appropriate model that fulfills the user's request for generating synthetic data. The user's request, along with the target values, may be used as criteria for selecting the trained ML model from the set of available models. This may ensure that the generated synthetic data meets the desired privacy and utility requirements specified by the user. In practice, the inference method may be applied in various domains and scenarios. For example, in healthcare, the inference method may be used to generate synthetic medical records that preserve patient privacy while maintaining the statistical properties necessary for research or analysis. In finance, synthetic transaction data may be generated to facilitate the development and testing of fraud detection algorithms without exposing real customer information. These are just a few examples, and the inference method can be adapted and customized to suit different applications and data types.

The evaluation function may allow for the selection of the most suitable model for a given user request. For example, the metric of the evaluation function may be the accuracy which is evaluated for different types of tasks such as classification tasks e.g., each ML model may be associated with the accuracies for performing a specific task. The request may comprise the desired task. The request may or may not further comprise a desired value of the evaluation function. For example, if a user requests synthetic data for a classification task with a desired accuracy, the inference method might select a model that has the matching accuracy on similar classification tasks. If a user requests synthetic data for a regression task, the system might select a model that has a low error on similar regression tasks. If a user requests synthetic data for a clustering task, the system might select a model that has a high silhouette score on similar clustering tasks. For example, the selection of the models may be performed using information on the models, wherein the information may be provided by data consumers.

The generated synthetic data is designed to be as accurate and useful as possible. For instance, in a classification task, the synthetic data might include a balanced distribution of classes to ensure that the model is not biased towards any particular class. In a regression task, the synthetic data might include a wide range of values to ensure that the model can handle different input scenarios. In a clustering task, the synthetic data might include distinct clusters to ensure that the model can distinguish between different groups.

According to one example, the inference method is performed in accordance with a client-server configuration (or client-server model), wherein the inference method is executed on a server system, wherein the request is received from the user of a client system. The server system may, for example, be the synthetic data generator. The client system is remotely connected to the server system. The client system is remotely connected to the server system through one or more networks, wherein the one or more networks may comprise a local area network (LAN), a radio access network (RAN), a metropolitan area network (MAN), a wide area network (WAN), Worldwide Interoperability for Microwave Access (WIMAX), a wireless local area network (WLAN), all or a portion of the Internet, any other communication system or a combination thereof.

Data may, for example, be exchanged between the client system and the server system using a client-server protocol. The client-server protocol may be a platform-agnostic client-server protocol. This may mean that the clients and server can be running on different operating systems. The standardized protocols may enable seamless communication between clients and servers, regardless of the underlying technology.

In one example implementation, the client system may initiate a connection with the server system using a communication protocol such as TCP/IP. Once the connection is established, the client system may send the request of synthetic data to the server system. The request may, for example, be in the form of an HTTP request. The server system receives the request and processes it in order to select the ML model and generate the synthetic data using the selected ML model. The server system may, for example, generate a response containing the requested synthetic data or containing a reference to a location of the synthetic data. The response may, for example, be formatted according to the protocol being used, such as an HTTP response. The server system may send the response back to the client system over the established connection. The response may contain an indication of the requested synthetic data. The client system receives the response from the server system and may process it accordingly. This may involve displaying the synthetic data to the user or processing the synthetic data e.g., by training a classifier with the synthetic data or for performing an analysis of the synthetic data. Finally, either the client system or the server system may initiate the closure of the connection. This may free up resources and allow both parties to handle other requests or connections.

The client-server configuration may allow for centralized inference data management, where ML models are stored and managed on the server system. This centralized approach may simplify data access, backup, and security measures. Access limits can be enforced through security policies, making it easier to safeguard the ML models. This configuration may also allow for horizontal scalability, where the number of client machines can be increased, and vertical scalability, where the entire process can be moved to more powerful servers or a multi-server configuration. This flexibility may enable the present subject matter to accommodate growing demands and handle increased workloads.

According to one example, the set of one or more ML models were trained with an original dataset, wherein the original dataset is augmented with an additional column, the additional column being associated with an additional attribute having two distinct values: first value and second value; in case a record of the augmented dataset has at least one NULL value, the first value is assigned to the additional attribute in that record, otherwise the second value is assigned to the additional attribute in that record; the inference method further comprising: identifying records of the synthetic data that correspond to the records having the first value in the augmented dataset, and replacing by NULL value in the synthetic data values of the one or more attributes that have NULL values in the augmented dataset, wherein the attributes which have the NULL values are numerical or continuous attributes. A record of the syntehtic data may correspond with a record of the augmentted dataset if they have a similarity value that exceeds a threshold, wherein the simialrity value may be obtained by applying a simialrity metric to the compared records.

According to one example, the inference method further comprises: deleting the synthetic data. The deletion of the synthetic data may be requested by the user. Alternatively, the synthetic data may be deleted automatically in case a data maintaining criterion is not fulfilled. The data maintaining criterion may, for example, require a minimum amount of free space on the computer system where the synthetic data is stored. The data maintaining criterion may, for example, require a deletion of the synthetic data right after a successful transmission of the synthetic data. For example, in case the minimum space is not present in the computer system, the synthetic data generator may delete at least the synthetic data to free-up space. The user may send another request at a later point of time (e.g., when the synthetic data is needed) to generate synthetic data e.g., days after the synthetic data has been deleted, the user may need synthetic data. The other request and the one or more target values may be used for selecting a trained ML model of the set of one or more trained ML models that fulfills the other request. The selected ML model may be used for generating synthetic data.

According to one example, the set of one or more ML models comprise multiple ML models. The inference method further comprises using the request and the one or more target values for selecting another trained ML model of the set of one or more trained ML models that fulfills the request. The other selected ML model may be used for generating further synthetic data. This may enable to obtain a variety of synthetic data in sufficient amount. For example, multiple ML models may fulfil the request. In this case, this example may make use of that to increase the amount of generated synthetic data. Following the above example, the request may comprise a desired value of the evaluation function which is at equal distance from two target values tV1 and tV2. In this case, ML1 and ML2 may be used to generate the synthetic data.

According to one example, the inference method further comprises using the synthetic data for training a machine learning model. The training may, for example, be performed for a classification task or a regression task. The training may be performed by using attributes of the set of attributes of the synthetic data as input and target for the supervised learning. In this case, the request sent by the user may indicate a type of the task needed. Alternatively, the synthetic data may be used for performing a data analysis

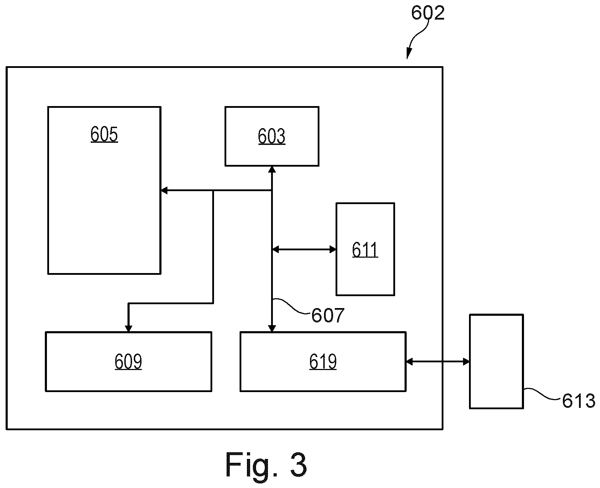

**Fig. 1** is a flowchart of an inference method for gneerating synthetic data according to an example of the present subject matter. The method of Fig. 1 may, for example, be performed by the computer system of Fig. 3.

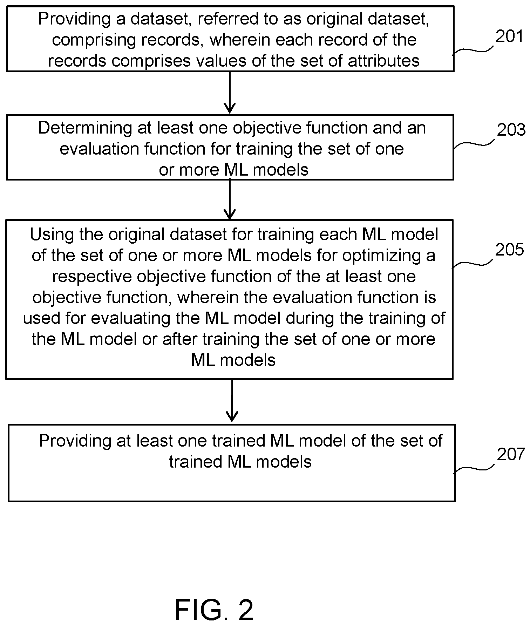

A set of one or more trained ML models may be provided in step 101. The set of one or more trained ML models may be trained by the training method as described herein or by other training techniques. Each trained ML model of the set of one or more trained ML models is associated with a respective target value of an evaluation function that has been used to evaluate the set of one or more ml models for training. The set of one more ML models may, for example, be stored in the computer system of FIG. 3. The set of one or more trained ML models whcih are provided in step 101 may be the ML model(s) provided by step 207 of FIG. 2. Alternatively, set of one or more trained ML models whcih are provided in step 101 may be all models trained by the method of FIG. 2.

A request to generate synthetic data may be received in step 103 from a user. The request and the target value(s) may be used in step 105 for selecting a trained ML model of the set of trained ML models that fulfills the request. The selected ML model may be used in step 107 for generating synthetic data. The synthetic data may be provided in step 109 to the user.

In one example, steps 103 to 109 may be repeated for each further request whcih is received from the same user or from another user. In one example, steps 105 to 109 may automatically be performed in response to receiving the request.

**Fig. 2** is a flowchart of a training method for training a set of one more machine learning models for generation of synthetic data in accordance with an example of the present subject matter. In one example, the set of one more machine learning models may be one ML model. Alternatively, the set of one more machine learning models may be multiple ML models. A dataset (named original dataset) may be provided in step 201. The original dataset comprises records, wherein each record of the records comprises values of the set of attributes. The original dataset may for example be stored in the computer system which is described with reference to FIG. 3. The set of one more machine learning models may be stored in the computer system of FIG. 3. The method of Fig. 2 may, for example, be performed by the computer system of Fig. 3.

At least one objective function and an evaluation function may be determined in step 203 for training the set of one or more ML models. For example, a user input may be received in step 203, wherein the user input indicates the at least one objective function and the evaluation function. In another example, the at least one objective function and the evaluation function may be selected (e.g., randomly) from predefined objective and evaluation functions which are associated with the ML models (e.g., in a file stored on the computer system)

The original dataset may be used in step 205 for training each ML model of the set of one or more ML models. The training of each ML model is performed for optimizing an objective function of the at least one objective function which is associated with the ML model. The training of each ML model may be performed for generation of synthetic data by the ML model. The evaluation function may be used for evaluating the ML model during the training of the ML model or after training the set of one or more ML models (after obtaining the trained set one or more ML models).

At least one trained ML model of the set of trained ML models may be provided in step 207 for generation of synthetic data (that correspond to the original dataset). The at least one trained ML model may, for example, be stored in the computer system. The computer system may for example receive requests for generation of synthetic data, and in response may use a selected one of the least one trained ML model for generation of the synthetic data.

In one example, the method steps of the method of Fig. 2 may automatically be performed e.g., upon receiving the original dataset or upon receiving a request. The providing of the original dataset in step 201 may comprise the creation of the original dataset. Thus, the training based on the original dataset may be automated. The provided trained ML model may then be configured to generate synthetic data in desired quantity on demand.

The at least one trained ML model that is provided in step 207 may be the set of trained ML models. Alternatively, the at least one trained ML model that is provided in step 207 may be selected from the set of trained ML models using a provision criterion. The provision criterion may, for example, require specific values of the evaluation function.

**Fig. 3** is a block diagram of an exemplary computer system for implementing the present method in accordance with an example of the present subject matter.

The components of the computer system 602 may include, but are not limited to, one or more processors or processing units 603, a storage system 611, a memory unit 605, and a bus 607 that couples various system components including memory unit 605 to processor 603. The storage system 611 may include for example a hard disk drive (HDD). The memory unit 605 may include computer system readable media in the form of volatile memory, such as random access memory (RAM) and/or cache memory.

The computer system 602 may also communicate with one or more external devices such as a keyboard, a pointing device, a display 613, etc.; one or more devices that enable a user to interact with computer system 602; and/or any devices (e.g., network card, modem, etc.) that enable the computer system 602 to communicate with one or more other computing devices. Such communication can occur via I/O interface(s) 619. Still yet, the computer system 602 can communicate with one or more networks such as a local area network (LAN), a general wide area network (WAN), and/or a public network (e.g., the Internet) via a network adapter 609. As depicted, the network adapter 609 communicates with the other components of the client system 602 via bus 607.

The memory unit 605 is configured to store applications that are executable on the processor 603. For example, the memory unit 605 may comprise an operating system as well as one or more application programs. The application programs comprise instructions that when executed enable to perform the method described with reference to Fig. 1 or Fig. 2.

The present subject matter may comprise the following clauses for the inference aspect.

Clause 1. A method for generating of synthetic data, the method comprising: providing a set of one or more trained machine learning (ML) models, each trained ML model of the set of one or more trained ML models being trained to generate synthetic data, wherein each trained ML model of the set of one or more trained ML models is associated with a respective target value of an evaluation function that has been used to evaluate the set of one or more ML models for the training; receiving from a user a request to generate synthetic data; using the request and the one or more target values for selecting a trained ML model of the set of one or more trained ML models that fulfills the request; using the selected ML model for generating synthetic data.

Clause 2. The method of clause 1, wherein the request indicates a desired value of the evaluation function and a desired number of records, wherein the selected ML model is the ML model whose target value matches the desired value, wherein the generated synthetic data comprises records in the desired number.

Clause 3. The method of clause 1 or 2, wherein the target value associated with each trained ML model indicates a security level of the synthetic data that is generated by the ML model, the method further comprising: providing user categories, each user category being associated with a security level, and determining to which user category the user belongs in order to select the corresponding ML model.

Clause 4. The method of clause 1 or 2, wherein selecting the trained ML model comprises: ranking the set of trained ML models using the respective target values of the evaluation function, determining an adequate rank for the user based on user predefined privilege access; and selecting the ML model associated with the determined rank.

Clause 5. The method of any of the preceding clauses, wherein the evaluation function is defined by one or more metrics, wherein the one or more metrics comprise a privacy metric and a utility metric, wherein the target value of the evaluation function is a pair of values of the privacy metric and utility metric.

Clause 6. The method of any of the preceding clauses, being performed in accordance with a client-server configuration, wherein the method is executed on a server system, wherein the request is received from the user of a client system, the client system being remotely connected to the server system.

Clause 7. The method of any of the preceding clauses, further comprising repeating the selecting, the generating and the providing for each further received request of synthetic data from the user or from another user.

Clause 8.The method of any of the preceding clauses, wherein the set of one or more ML models were trained with an original dataset, wherein the original dataset is augmented with an additional column, the additional column being associated with an additional attribute having two distinct values: first value and second value; in case a record of the augmented dataset has at least one NULL value, the first value is assigned to the additional attribute in that record, otherwise the second value is assigned to the additional attribute in that record; the method further comprising: identifying records of the synthetic data that correspond to the records having the first value in the augmented dataset, and replacing by NULL value in the synthetic data values of the one or more attributes that have NULL values in the augmented dataset, wherein the attributes which have the NULL values are numerical or continuous attributes.

Clause 9. The method of any of the preceding clauses, further comprising using the synthetic data for training a machine learning model, the machine learning model using attributes of the set of attributes as input and target for the training, or for performing a data analysis.

Clause 10. The method of any of the preceding clauses, further comprising: deleting the synthetic data, in response to deleting the synthetic data receiving from the user another request to generate synthetic data; using the other request and the one or more target values for selecting a trained ML model of the set of one or more trained ML models that fulfills the other request; and using the selected ML model for generating synthetic data.

Clause 11. The method of any of the preceding clauses, the set of one or more ML models comprising multiple ML model, the method further comprising using the request and the target values for selecting another trained ML model of the set of trained ML models that fulfills the request; and using the other selected ML model for generating further synthetic data.

Clause 12. The method of any of the preceding clauses, wherein using the request and the one or more target values for selecting the trained ML model that fulfills the request comprises: assigning a target value of the one or more target values to the user based on a predefined criteria, the criteria assigning a target value based on a location of the user and/or based on a time at which the request is received and/or based on other attributes descriptive of the user and/or the request; wherein the assigned target value is the target value that fulfills the request.

Clause 13. The method of any of the preceding clauses, further comprising providing the synthetic data to the user.

Clause 14. The method of any of the preceding clauses, the set of one or more ML models comprising multiple ML models.

Clause 15.A synthetic data generator for generating of synthetic data, the synthetic data generator comprising a set of one or more trained machine learning (ML) models, each trained ML model of the set of one or more trained ML models being trained to generate synthetic data, wherein each trained ML model of the set of one or more trained ML models is associated with a respective target value of an evaluation function that has been used to evaluate the set of one or more ML models for the training; the synthetic data generator being configured for: receiving from a user a request to generate synthetic data; using the request and the one or more target values for selecting a trained ML model of the set of one or more trained ML models that fulfills the request; using the selected ML model for generating synthetic data.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

The term "computer system" refers to data processing hardware and encompasses all kinds of apparatus, devices, and machines for processing data, including by way of example, a programmable processor, a computer, or multiple processors or com-puters. The apparatus can also be or further include special purpose logic circuitry, e.g., a central processing unit (CPU), a FPGA (field programmable gate array), or an ASIC (application specific integrated circuit). In some implementations, the data pro-cessing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

While the invention has been illustrated and described in detail in the drawings and foregoing description, such illustration and description are to be considered illustrative or exemplary and not restrictive; the invention is not limited to the disclosed examples.

## Claims

1. A method for training a set of one or more machine learning (ML) models for generation of synthetic data, the method comprising:
providing (201) a dataset, referred to as original dataset, comprising records, wherein each record of the records comprises values of a set of attributes;
determining (203) at least one objective function and an evaluation function for training the set of one or more ML models;
using (205) the original dataset for training each ML model of the set of one or more ML models for optimizing a respective objective function of the at least one objective function, wherein the evaluation function is used for evaluating the ML model during the training of the ML model or after training the set of one or more ML models;
providing (207) at least one trained ML model of the set of trained ML models.

2. The method of claim 1, wherein the at least one objective function is one objective function which is used for training the set of one or more ML models.

3. The method of claim 1, the set of one or more ML models comprising multiple ML models, and/or wherein the at least one objective function is a set of objective functions associated with the set of ML models respectively.

4. The method of claim 1, the set of one or more ML models comprising multiple ML models, wherein the at least one objective function is multiple objective functions, wherein each objective function of the multiple objective functions is associated with a respective one or more ML models of the set of ML models.

5. The method of any of the preceding claims, wherein the evaluation function is defined by one or more metrics and a target criterion, wherein evaluating the ML model using the evaluation function comprises: evaluating the one or more metrics using synthetic data that is generated by the ML model and the original dataset, determining whether the evaluated one or more metrics fulfill the target criterion,
wherein, optionally, the one or more metrics comprise a privacy metric and a utility metric.

6. The method of claim 5, wherein the target criterion requires that a combination of the one or more metrics of the evaluation function has one target value or the combination is within a target range of values, wherein the combination is a weighted sum of the metrics of the evaluation function using weights, wherein each metric is associated with a respective weight of the weights.

7. The method of any of the preceding claims, wherein providing the original dataset comprises
performing at least one of:
receiving initial records from one or more data sources of structured data; or
deriving initial records from one or more data sources of unstructured data;
obtaining the records of the original dataset from the initial records,
wherein, optionally, the obtaining is performed so that the records of the original dataset are the initial records.

8. The method of any of the preceding claims, wherein the records of the original dataset are obtained by preprocessing initial records,
wherein, optionally, the preprocessing comprises: replacing NULL values in the initial records by predefined values, and using the resulting initial records as the records of the original dataset, wherein, optionally, replacing each NULL value comprises: identifying an attribute of the set of attributes having said NULL value; sampling the values of the identified attribute which are not NULL values for obtaining a sampled value, wherein the predefined value that replaces the NULL value is the sampled value, wherein, optionally, the sampling is performed such that the distribution of the non-NULL values of the identified attribute before replacement of the NULL value is similar to the distribution of the non-NULL values of the identified attribute after replacement of the NULL value.

9. The method of claim 8, further comprising:
creating an additional column in the original dataset resulting an augmented dataset, the additional column being associated with an additional attribute having two distinct values: first value and second value;
in case a record of the augmented dataset has at least one NULL value, assigning the first value to the additional attribute in that record,
otherwise assigning the second value to the additional attribute in that record;
after generating the synthetic data by each trained ML model of the provided trained ML models, identifying records of the synthetic data that correspond to the records having the first value in the augmented dataset, and replacing by NULL value the synthetic data values of the one or more attributes that have NULL values in the augmented dataset.

10. The method of any of the preceding claims 8 to 9, wherein the preprocessing comprises: detecting and removing outliers in the initial records using a predefined outlier processing procedure,
wherein, optionally, the outlier processing procedure uses k-anonymization.

11. The method of any of the preceding claims, the provided at least one trained ML model being the set of trained ML models, or
the method further comprising: ranking the set of trained ML models using the respective values of the evaluation function, selecting the highest n ranked ML models of the set of ML models, wherein the provided at least one trained ML model is the selected ML models, where n is an integer higher than or equal to one.

12. The method of any of the preceding claims, using a trained ML model of the provided at least one trained ML model for generating synthetic data.

13. The method of any of the preceding claims, wherein the evaluation function is defined by one or more metrics and a target criterion, the target criterion indicating a target value or a target range values for the one or more metrics, the method comprises:
creating a synthetic data generation module, the data generation module comprising the at least one ML model of the set of trained ML models in association with the respective targets values;
receiving at the synthetic data generation module a request to generate synthetic data;
selecting by the synthetic data generation module a trained ML model based on the target value associated with the trained ML model and the received request;
using by the synthetic data generation module the selected ML model to generate synthetic data;
providing by the synthetic data generation module the synthetic data to a requester of the synthetic data.

14. A computer program comprising instructions for causing a computer system for performing the method of claim 1.

15. A computer system (602) for training a set of one or more machine learning (ML) models for generation synthetic data, the computer system comprising the set of one or more ML models and an original dataset comprising records, wherein each record of the records comprises values of a set of attributes, the computer system being configured for:
determining (203) at least one objective function and an evaluation function for training the set of one or more ML models;
using (205) the original dataset for training each ML model of the set of one or more ML models for optimizing a respective objective function of the at least one objective function, wherein the evaluation function is used for evaluating the ML model during the training of the ML model or after training the set of one or more ML models;
providing (207) at least one trained ML model of the set of trained ML models.
